# EUROPEAN PATENT APPLICATION

(11) **EP 3 171 583 A1**
(43) Date of publication of application: **24.05.2017**
(21) Application number: 16188117.2
(22) Date of filing: 09.09.2016
(51) Int. Cl.: H04N 1/00, G06F 17/30, G06F 3/0484

(54) **IMAGE PROCESSING APPARATUS WITH THUMBNAIL DISPLAY FUNCTION**

(30) Priority: 19.11.2015 JP 2015226320; 08.04.2016 JP 2016078373
(71) Applicant: Kabushiki Kaisha Toshiba, Tokyo 105-8001 (JP); Toshiba TEC Kabushiki Kaisha, Tokyo 141-0032 (JP)
(72) Inventor: YAMANISHI, Hitoshi, Shinagawa-ku, Tokyo 141-8562 (JP)
(74) Representative: Takeuchi, Maya

(57) **Abstract**

In an image processing apparatus, an acquiring unit acquires a document comprising a plurality of images. A display screen includes a plurality of thumbnail images arranged linearly and in a sequence, each of the thumbnail images being generated from a corresponding one of the plurality of images acquired by the acquiring unit. An input unit receives a selection input and a process input. In response to the selection input, a control unit controls the display unit to update the screen so that a displayed size of the selected thumbnail image is larger than a displayed size of the thumbnail image of the subsequent page. The control unit controls the display unit to update the screen as indicated by the process input. The control unit provides the document with the plurality of images in the changed order to a selected destination.

## Description

### FIELD

Embodiments described herein relate generally to an image processing apparatus.

### BACKGROUND

An image processing apparatus such as a digital multi-functional peripheral has a function that displays the images of a plurality of pages in a list of thumbnails. For example, a multi-functional peripheral has a preview display function that scans a plurality of pages of a document and displays each image of the plurality of scanned pages as thumbnails. However, a page selected by a user may not be easily recognized, or a subsequent operation may not be easily performed in the preview display provided by the multi-functional peripheral.

### DESCRIPTION OF THE DRAWINGS

FIG. 1 is a block diagram schematically illustrating a functional configuration of an image processing apparatus according to an embodiment.
FIG. 2 illustrates an example operation screen for a scan process displayed on the image processing apparatus.
FIG. 3 illustrates a first preview display screen displayed on the image processing apparatus.
FIG. 4 illustrates a second preview display screen displayed on the image processing apparatus.
FIG. 5 illustrates a third preview display screen displayed on the image processing apparatus.
FIG. 6 illustrates a fourth preview display screen displayed on the image processing apparatus.
FIG. 7 illustrates a fifth preview display screen displayed on the image processing apparatus.
FIGS. 8 and 9 are flowcharts illustrating an example sequence of operations for processing preview display screens in the image processing apparatus.

### DETAILED DESCRIPTION

In an image processing apparatus, an acquiring unit acquires a document comprising a plurality of images each corresponding to one of a plurality of pages. A display displays a screen including at least two of a plurality of thumbnail images arranged linearly and in a sequence corresponding to a sequence of the plurality of pages, each of the thumbnail images being generated from a corresponding one of the plurality of images acquired by the acquiring unit. An input unit receives a selection input selecting one of a plurality of thumbnail images displayed on the screen, and a process input selecting an operation to change the sequence of the thumbnail images with respect to the selected thumbnail image. In response to the selection input, a control unit controls the display unit to update the screen so that a display position of thumbnail images displayed in the screen is moved to a predetermined display position in which the selected thumbnail image and a thumbnail image of a subsequent page are displayed and a displayed size of the selected thumbnail image is larger than a displayed size of the thumbnail image of the subsequent page. In response to the process input, the control unit updates an order of the plurality of images and controls the display unit to update the screen, in accordance with the changed sequence of the thumbnail images indicated by the process input. The control unit provides the document with the plurality of images in the changed order to a selected destination.

Preferably, the predetermined display position is a position where the selected thumbnail image and thumbnail images of preceding and succeeding pages are displayed.

Preferably, the predetermined display position is a position where the selected thumbnail image is at a center of the linearly arranged thumbnail images.

Preferably, the input unit is further configured to receive a cancellation input different from the selection input.

Preferably, the control unit controls the display unit to update the screen based on the deselection input so that the displayed size of a previously selected thumbnail image is the same as the displayed size of the thumbnail image of the subsequent page.

Preferably, the input unit is a touch panel on the display unit.

Preferably, the acquisition unit is a scanner that acquires the plurality of images by scanning the plurality of pages.

Preferably, the selected destination is one of an email address, a memory location corresponding to a storage device of the apparatus, and a memory location corresponding to an external storage device.

Preferably, the operation to change the sequence of the thumbnail images is one of: a delete operation in which the selected thumbnail image is deleted from the sequence, an insert operation in which another thumbnail image is inserted in the sequence preceding the selected thumbnail image, and a replace operation in which the selected thumbnail image is replaced with a different thumbnail image.

The present invention further relates to an image processing method comprising the steps of: acquiring a document comprising a plurality of images each corresponding to one of a plurality of pages; generating a plurality of thumbnail images from the plurality of acquired images; displaying on a screen at least two of the plurality of thumbnail images arranged linearly and in a sequence corresponding to a sequence of the plurality of pages; receiving a selection input selecting one of a plurality of thumbnail images displayed on the screen; updating the screen based on the received selection input so that a display position of thumbnail images displayed in the screen is moved to a predetermined display position in which the selected thumbnail image and a thumbnail image of a subsequent page are displayed and a displayed size of the selected thumbnail image is larger than a displayed size of the thumbnail image of the subsequent page; receiving a process input selecting an operation to change the sequence of the thumbnail images with respect to the selected thumbnail image; in response to the process input, updating an order of the plurality of images and controlling the display unit to update the screen, in accordance with the changed sequence of the thumbnail images indicated by the process input; and providing the document with plurality of images in the changed order to a selected destination.

Preferably, the predetermined display position is a position where the selected thumbnail image and thumbnail images of preceding and succeeding pages are displayed.

Preferably, the predetermined display position is a position where the selected thumbnail image is at a center of the linearly arranged thumbnail images.

The method may further comprise the steps of: receiving a cancellation input different from the selection input; and updating the screen based on the deselection input so that the displayed size of a previously selected thumbnail image is the same as the displayed size of the thumbnail image of the subsequent page.

Preferably, acquiring the plurality of images comprises scanning the plurality of pages to generate the plurality of images.

Preferably, the selected destination is one of an email address, a memory location corresponding to a storage device of the apparatus, and a memory address corresponding to an external storage device.

Preferably, the operation to change the sequence of the thumbnail images is one of: a delete operation in which the selected thumbnail image is deleted from the sequence, an insert operation in which another thumbnail image is inserted in the sequence preceding the selected thumbnail image, and a replace operation in which the selected thumbnail image is replaced with a different thumbnail image.

The present invention also relates to a non-transitory computer readable medium containing instructions causing an image processing apparatus to perform the steps of: acquiring a document comprising a plurality of images each corresponding to one of a plurality of pages; generating a plurality of thumbnail images from the plurality of acquired images; displaying on a screen at least two of the plurality of thumbnail images arranged linearly and in a sequence corresponding to a sequence of the plurality of pages; receiving a selection input selecting one of a plurality of thumbnail images displayed on the screen; updating the screen based on the received selection input so that a display position of thumbnail images displayed in the screen is moved to a predetermined display position in which the selected thumbnail image and a thumbnail image of a subsequent page are displayed and a displayed size of the selected thumbnail image is larger than a displayed size of the thumbnail image of the subsequent page; receiving a process input selecting an operation to change the sequence of the thumbnail images with respect to the selected thumbnail image; in response to the process input, updating an order of the plurality of images and controlling the display unit to update the screen, in accordance with the changed sequence of the thumbnail images indicated by the process input; and providing the document with plurality of images in the changed order to a selected destination.

Preferably, the screen is updated based on the received selection input so that a displayed size of the selected thumbnail image is larger than a displayed size of the thumbnail image of the subsequent page.

Preferably, acquiring the plurality of images comprises scanning the plurality of pages to generate the plurality of images.

Preferably, the selected destination is one of an email address, a memory location corresponding to a storage device of the apparatus, and a memory address corresponding to an external storage device.

Preferably, the operation to change the sequence of the thumbnail images is one of: a delete operation in which the selected thumbnail image is deleted from the sequence, an insert operation in which another thumbnail image is inserted in the sequence preceding the selected thumbnail image, and a replace operation in which the selected thumbnail image is replaced with a different thumbnail image.

Hereinafter, an embodiment will be described, as non-limiting examples, in detail with reference to the drawings.

First, a configuration of a digital multi-functional peripheral (MFP) 1 will be described as an image processing apparatus.

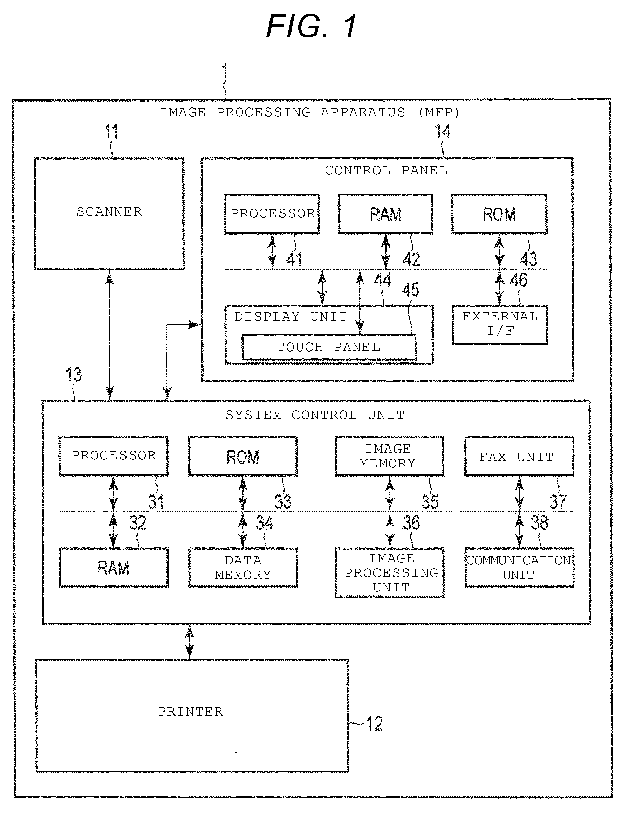

FIG. 1 is a block diagram illustrating an example configuration of the MFP 1.

In the example illustrated in FIG. 1, the digital multi-functional peripheral (MFP) 1 includes a scanner 11, a printer 12, a system control unit 13, and a control panel 14. the scanner 11, the printer 12, and the control panel 14 are connected to the system control unit 13.

The scanner 11 is a device that optically reads a document and generates image data. The scanner 11 reads a document that is set on a platen glass or reads a document supplied by an automatic document feeder (ADF). The scanner 11, for example, includes a photoelectric conversion unit including a CCD line sensor or the like that converts an image corresponding to one line in a main-scanning direction of a document into image data. The scanner 11 scans a document with the CCD line sensor in a sub-scanning direction of the document, thereby reading the image of the document. The scanner 11 scans the document in response to an operating instruction from the system control unit 13. The scanner 11 outputs the read image of the document as image data to the system control unit 13. The scanner 11 functions as an acquiring unit that receives images corresponding to a plurality of pages. The acquiring unit that obtains images may obtain images corresponding to a plurality of pages from an external apparatus.

The printer 12 forms an image on an image forming medium such as a sheet. The printer 12 prints an image on the sheet based on the image data supplied from the system control unit 13 under various printing conditions specified by the system control unit 13. A printing condition that can be set for the printer 12 depends on the specification of the printer 12. For example, when the printer 12 is a color printer, monochrome printing or color printing can be specified as a color setting. When the printer has a duplex printing function, single or double can be specified as a printed side setting. The size, the type, and the like of a sheet on which an image is printed may be specified from the sheet set in the printer 12.

The printer 12 can utilize various image forming methods. For example, the printer 12 may be an electrophotographic printer, an inkjet printer or a thermal transfer printer.

The system control unit 13 generally controls the entirety of the MFP 1. The system control unit 13 is connected to each unit of the MFP 1, such as the scanner 11, the printer 12, and the control panel 14. The system control unit 13 bidirectionally communicates with the scanner 11, the printer 12, and the control panel 14. The system control unit 13 generally controls operation of each unit such as the scanner 11, the printer 12, and the control panel 14. The system control unit 13 functions to perform various processes such as image processing.

In the configuration example illustrated in FIG. 1, the system control unit 13 includes a processor 31, a RAM 32, a ROM 33, a data memory 34, an image memory 35, an image processing unit 36, a FAX unit 37, a communication unit 38, and the like. The processor 31, the RAM 32, the ROM 33, and the data memory 34 function as a processing unit that controls each unit and performs various processes.

The processor 31 functions as a control unit. The processor 31 performs various operations in accordance with a program. The processor 31 is, for example, a CPU. The processor 31 executes a program stored in the ROM 33 or the data memory 34 and thereby achieves various processing functions. The RAM 32 is a working memory. The RAM 32 is, for example, a volatile memory. The RAM 32 stores a program to be executed or functions as a buffer memory. The ROM 33 is a program memory. The ROM 33 is, for example, a non-rewritable non-volatile memory. The ROM 33 stores a program, setting data, and the like specific to the MFP 1.

The data memory 34 stores control data, a control program, setting information, and the like. The data memory 34 is, for example, rewritable non-volatile memory. The data memory 34 also stores, for example, default setting values of various operating modes.

The image memory 35 includes a hard disk drive, a page memory, and the like. The image memory 35 stores a plurality of pieces of image data. The image memory 35 also functions as a page memory into which scanned image data or printed image data is loaded. Image data may not necessarily be stored in the image memory 35. For example, image data may be stored in the data memory 34.

The image processing unit 36 processes image data. The image processing unit 36 performs image processing of the image data read by the scanner 11 from the document. The image processing unit 36 may perform image processing of image data that is obtained from an external apparatus through the communication unit 38, the FAX unit 37, or the like. The image processing unit 36, for example, generates a thumbnail image from the image scanned by the scanner 11. A part or the entirety of the image processing function provided by the image processing unit 36 may be performed by the processor 31.

The FAX unit 37 is a FAX interface for performing facsimile communication. The communication unit 38 is a network interface for performing data communication with an external apparatus through a network such as the Internet.

The control panel 14 is a user interface. The control panel 14 displays guidance to a user or receives an operating instruction from the user. In the configuration example illustrated in FIG. 1, the control panel 14 includes a processor 41, a RAM 42, a ROM 43, a display unit 44, a touch panel 45, and an external interface (I/F)46.

The processor 41 controls the control panel 14. The processor 41 is an integrated circuit that executes a program. The processor 41 is, for example, a CPU. The processor 41 executes a program stored in the ROM 43, thereby achieving various processing functions. The processor 41 communicates to the system control unit 13 information that is input into each unit of the control panel 14. The processor 41 controls each unit of the control panel 14 in response to a control signal from the system control unit 13.

The RAM 42 is a working memory. The RAM 42 is, for example, a volatile memory. The ROM 43 is a non-volatile program memory. The ROM 43 may be capable of updating a program, control data, setting information, display data, and the like by including a rewritable non-volatile memory.

The display unit 44 displays an operating screen, operating guidance, and the like. The display unit 44 is, for example, a liquid crystal display device. The display unit 44 includes the touch panel 45 on a display screen thereof. The touch panel 45 functions as an input unit. The touch panel 45 detects a part touched by the user on the display screen of the display unit 44. The touch panel 45 supplies to the processor 41 information, as a detection signal, that indicates the position touched by the user. The input unit may be in any form provided that a displayed icon can be selected and may be an input device such as a pointing device.

The processor 41 controls the screen displayed in the display unit 44. The processor 41 displays various operating screens in the display unit 44 in response to an instruction from the system control unit 13. For example, the processor 41, in response to an instruction from the system control unit 13, displays in the display unit 44 a preview display screen in which thumbnail images corresponding to the scanned images of a plurality of pages are linearly arranged. The processor 41 may be described herein as "displaying" screens or information, meaning that the processor 41 controls the display unit 44 to display information on the display unit 44.

The processor 41 detects, from the detection signal from the touch panel 45, the position where the user provides input (touches) on the display screen of the display unit 44. For example, the processor 41 specifies an icon (instruction content) on which the user provides input, based on the display position of icons displayed in the display unit 44 and the position of the touch of the user detected by the touch panel 45. The processor 41 supplies information indicating the detected instruction content to the processor 31 of the system control unit 13. The processor 41 may detect the content of an operating instruction in response to a touch operation (the characteristics of a touch such as the distance and the speed of movement of the position of the touch) provided by the user on the display screen and detected by the touch panel 45.

The external interface 46 is an interface for connecting an external apparatus thereto. The external interface 46 can be configured as an interface that complies with a generally used standard such as Universal Serial Bus (USB). For example, a portable storage device is connected to the external interface 46. A numeric keypad, a portable keyboard, and the like may be connected to the external interface.

The control panel 14 may include hardware keys. For example, the control panel 14 may include a numeric keypad or buttons that specify performing processes such as a scan process.

Next, examples of the display screen displayed on the display unit 44 of the control panel 14 of the MFP according to the embodiment will be described.

The display unit 44 of the control panel 14 displays a main menu screen in a standby state. The main menu screen is an operating screen for providing various operating instructions. The main menu screen displays an icon (copy button) that specifies performing a copy process, an icon (scan button) that specifies performing a scan process, an icon (print button) that specifies performing a print process, an icon (fax button) that specifies performing a fax process, and the like. These buttons may be provided as hardware keys in the control panel 14. The display unit 44 displays a scan menu screen when the user touches the scan button. The scan menu screen is an operating screen on which the content of the scan process is set.

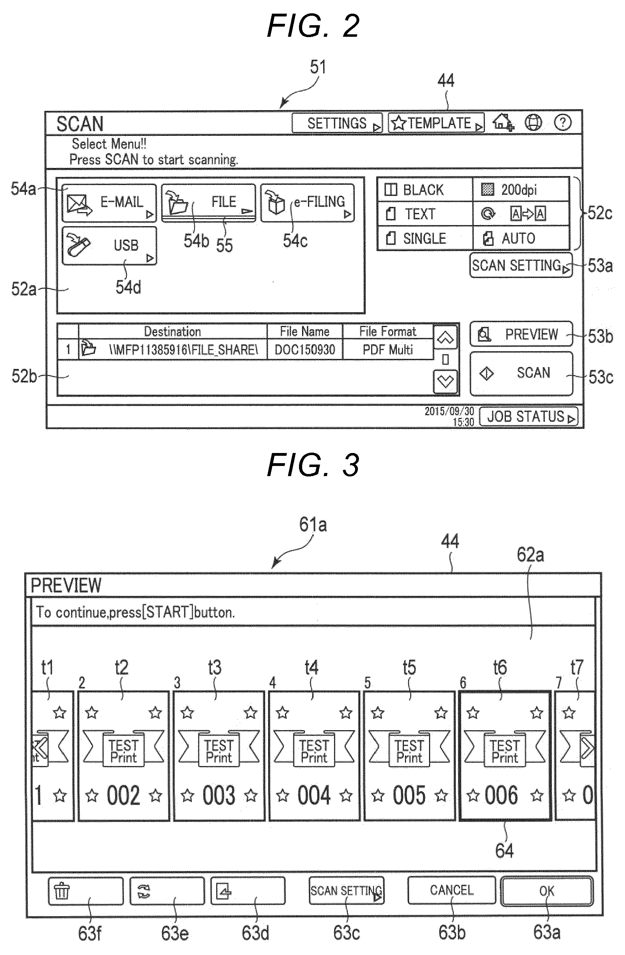

FIG. 2 illustrates an example of a scan menu screen 51.

The scan menu screen 51 illustrated in FIG. 2 includes display regions 52a, 52b, and 52c, icons 53a, 53b, and 53c, and the like.

The display region 52a of the scan menu screen 51 displays a group of icons specifying the content of the scan process. Icons such as an e-mail icon 54a, a file icon 54b, an e-filing icon 54c, and a USB icon 54d are displayed in the display region 52a in the example illustrated in FIG. 2.

The e-mail icon 54a is, for example, a button that specifies a process of sending a scanned image by e-mail (scan to e-mail). The file icon 54b is a button that specifies retaining the scanned image in a specified file (folder) (scan to file). Information that indicates the file (folder) in which the scanned image is retained is displayed in the display region 52b in a case where the file icon 54b is selected. The e-filing icon 54c is a button that specifies retaining the scanned image in memory (for example, the data memory 34) in the MFP 1. The USB icon 54d is a button that specifies retaining the scanned image in an external storage device (USB memory) connected to the external I/F 46.

An underline 55 as a mark indicating that it is being selected is displayed in an icon selected in the display region 52a. The underline 55 is displayed in the file icon 54b in the example illustrated in FIG. 2. Display of a selected icon may use a selection indication other than the underline. For example, an icon being selected may be displayed in an inverted manner or in a specified color, or may be highlighted with a frame or the like.

The display region 52c in the scan menu screen 51 displays information that indicates scan settings. Information that indicates scan settings such as a color mode, a resolution, an image type, and single/double is displayed in the display region 52c in the example illustrated in FIG. 2.

The scan setting icon 53a is a button that specifies configuring the scan settings. The scan setting icon 53a is displayed in the vicinity of the display region 52c. The display unit 44 displays a setting screen for specifying the scan settings when the scan setting icon 53a is specified. The scan setting screen is an operating screen on which settings such as a color mode, a resolution, an image type, single/double, and the use of preview display (turning on or off a preview mode) can be specified. Settings specified on the scan setting screen are reflected in the content (scan setting content) displayed in the display region 52c.

The preview icon 53b is a button that specifies displaying the preview display screen (preview display). The preview display screen displays a scan result. The preview display screen displays the images of each scanned page of the document (scanned images) in a list of thumbnails. The preview display screen will be described in detail later. The display unit 44 displays the preview display screen in a case where the preview icon 53b is specified.

The scan icon 53c is a button that specifies performing a scan. When the user touches the scan icon 53c, the scanner 11 scans the document in accordance with the current scan settings under control of the system control unit 13.

Next, the preview display screen displayed in the display unit 44 of the control panel 14 will be described.

FIGS. 3-7 illustrate examples of a preview display screen 61.

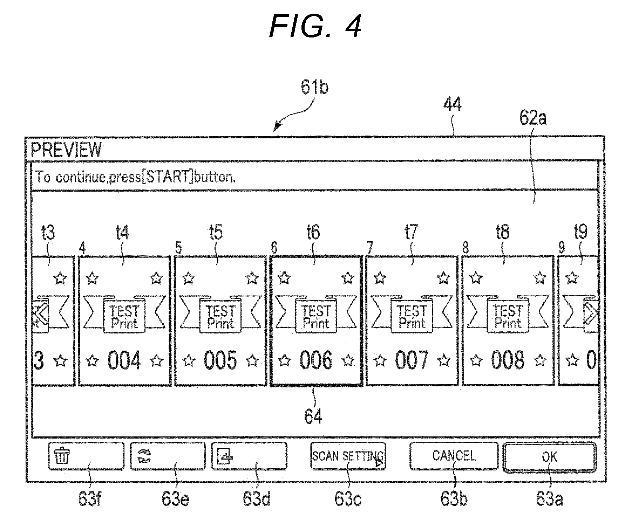

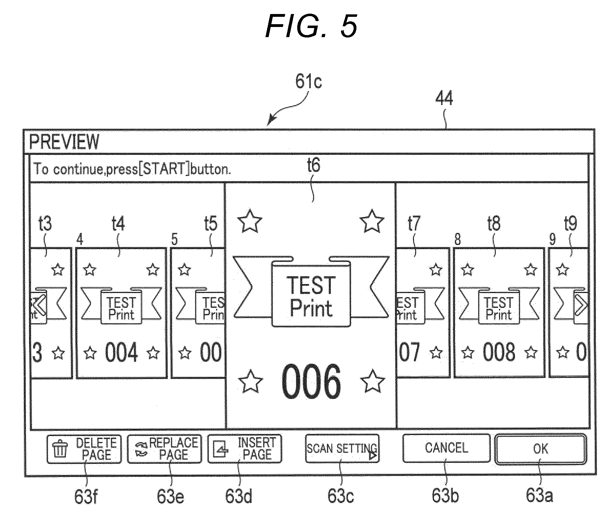

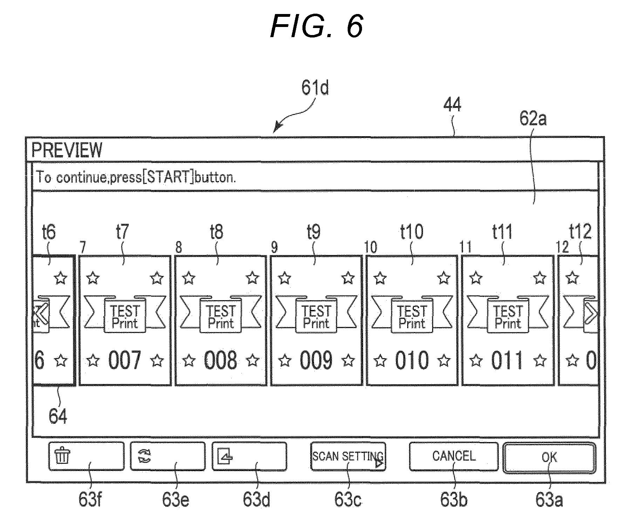

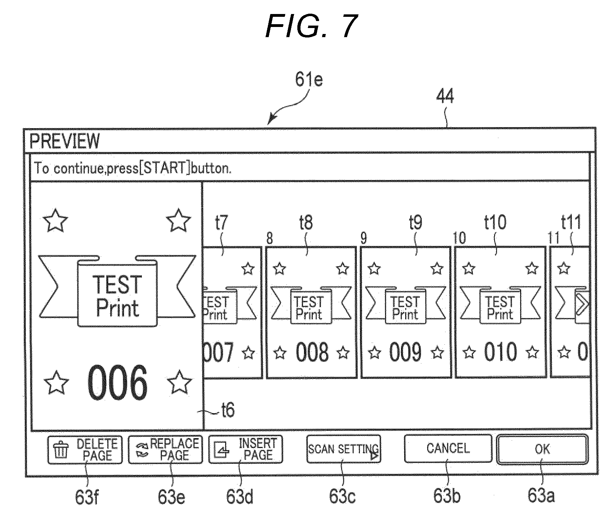

FIG. 3 illustrates a first example of the preview display screen 61 (61a). FIG. 4 illustrates a second example of the preview display screen 61 (61 b). FIG. 5 illustrates a third example of the preview display screen 61 (61c). FIG. 6 illustrates a fourth example of the preview display screen 61 (61 d). FIG. 7 illustrates a fifth example of the preview display screen 61 (61e).

The preview display screen 61 displays a scan result. The preview display screen 61 displays, as a scan result, thumbnail images of the images of each scanned page in a list. As illustrated in FIGS. 3- 7, the preview display screen 61 includes a display region 62a and icons 63a to 63f.

In the display region 62a, thumbnail images t1, t2, ... of each page corresponding to the images of each scanned page are displayed. In the display example illustrated in FIG. 3, the thumbnail images t1, t2, ... of each page are linearly displayed in order of page numbers from left to right in the display screen 61 a. The preview display screen may be in any form provided that the thumbnail images of each page are linearly displayed in order. For example, the thumbnail images of each page may be linearly displayed in order from top to bottom, may be displayed in a matrix form, or may be linearly displayed in a sloping direction. A part of the thumbnail images of each page may be displayed to overlap with the thumbnail image of the subsequent page.

The OK icon 63a, the cancel icon 63b, and the scan setting icon 63c are displayed to be selectable on the preview display screen 61. The OK icon 63a and the cancel icon 63b are buttons that specify processes for all scan results. The OK icon 63a is a button that specifies confirming a scan result in the preview display. The cancel icon 63b is a button that specifies discarding a scan result in the preview display. The scan setting icon 63c is a button that specifies additional settings for the scan process.

The insert icon 63d, the replace icon 63e, and the delete icon 63f are buttons that specify processes for the image of a page displayed in an enlarged manner, i.e., a selected page. The insert icon 63d, the replace icon 63e, and the delete icon 63f are switched to be displayed in a selectable manner or in a non-selectable manner according to selection of the thumbnail images. For example, the icons 63d, 63e, and 63f are displayed in a non-selectable manner as illustrated in FIG. 3 and FIG. 4 in a case where no thumbnail image is displayed in an enlarged manner, i.e., no thumbnail image is selected. The icons 63d, 63e, and 63f are displayed in a selectable manner as illustrated in FIG. 5 in a case where one thumbnail image is displayed in an enlarged manner. That is, in FIG. 5, thumbnail t6 is selected, and icons 63d, 63e and 63f may be selected for specifying the respective processes with respect to thumbnail t6.

The delete icon 63f is a button that specifies deleting the image of a page corresponding to the selected thumbnail image that is displayed in an enlarged manner. The replace icon 63e is a button that specifies replacing the image of a page corresponding to the selected thumbnail image with a new image to be scanned. The insert icon 63d is a button that specifies inserting a new image to be scanned immediately before a page corresponding to the selected thumbnail image.

Each of the thumbnail images t1, t2, ... of each page displayed in the display region 62a of the preview display screen 61 is displayed to be selectable as icons. The user can select a specific page among the images of each scanned page by touching a displayed part (icon) of a thumbnail image. The display position of the thumbnail images of each page is moved (updated) on the preview display screen 61 in reference to the selected thumbnail image. The selected thumbnail image is displayed in an enlarged manner after the display position is moved, while the unselected thumbnail images are not enlarged. Assume that the thumbnail image t6, for example, is touched on the preview display screen 61a illustrated in FIG. 3. When the thumbnail image t6 is touched, the display position of the thumbnail images t1, t2, ... of each page is moved in such a manner that the thumbnail image t6 is displayed at the center as illustrated on the preview display screen 61 b in FIG. 4. In the examples of FIG. 3 and FIG. 4 the thumbnail images t1, t2, ... slide left to position the thumbnail image t6 at the center of the preview display screen as shown in FIG. 4. The selected thumbnail image t6 is highlighted on the preview display screens 61 a and 61 b illustrated in FIG. 3 and FIG. 4 by displaying a frame 64. Furthermore, the touched thumbnail image t6 is displayed in an enlarged manner as illustrated on the preview display screen 61c in FIG. 5 after the display position is moved, while the untouched thumbnail images t3-t5 and t7-t9 are not enlarged.

That is, when one thumbnail image is selected, the display position of each thumbnail image is moved (updated) as a whole in reference to the selected thumbnail image without a change in the order of the thumbnail images. For example, the display position of each thumbnail image is moved as a whole in such a manner that the selected thumbnail image is displayed at the center without a change in the order of the thumbnail images. When the thumbnail images are displayed linearly along a display axis, which may be linear or nonlinear, this may be done by sliding the thumbnail images along the display axis to bring the selected thumbnail image to the center of the display without changing the order of the thumbnail images. The sliding action may be represented graphically by depicting an animated sliding view on the display screen, or the thumbnail images may simply be repositioned without animation. Displaying the selected thumbnail image at the center allows the user to easily recognize the selected thumbnail image on the preview display screen. In addition, the thumbnail images of pages in the vicinity of the selected thumbnail image are easily identified and selected on the preview display screen in which the selected thumbnail image is displayed at the center.

The display position of each thumbnail image may be in any form provided that the display position is moved in reference to the selected thumbnail image, and are not limited to the form in which the selected thumbnail image is present at the center. For example, the display position of each thumbnail image may be in any form provided that the thumbnail image of the page subsequent to the selected thumbnail image is in a display position. On such a preview display screen, the thumbnail image of the page subsequent to, and/or preceding, the selected thumbnail image can be displayed to be visually recognizable and selectable at all times.

The selected thumbnail image is displayed in an enlarged manner in a display position after being moved (updated) on the preview display screen 61, while unselected thumbnail images are not enlarged. For example, the selected thumbnail image t6 is displayed in an enlarged manner in a display position at the center after being moved, as shown on the preview display screen 61c illustrated in FIG. 5. The page of the thumbnail image displayed in an enlarged manner indicates that the thumbnail image displayed in an enlarged manner is selected on the preview display screen 61c, as shown for page t6 in FIG. 5. The enlarged display of the thumbnail image may be prepared by simply enlarging the thumbnail image or displaying an image magnified from the scanned image of the page.

The enlarged display of the thumbnail image is positioned such that the unenlarged thumbnail images of the preceding and succeeding pages can be selected. Accordingly, the user can identify and select at least a part of the images of the preceding and succeeding pages in a state where a certain thumbnail image is displayed in an enlarged manner.

The display state of the preview screen 61 on which the selected thumbnail image is displayed in an enlarged manner is changed in response to various operations (touch operations) performed on the touch panel 45. For example, a part or the entirety of a selected thumbnail image that is displayed in an enlarged manner is enlarged by a touch operation such as spreading out with fingers (pinching open). Alternatively, a part or the entirety of the selected thumbnail image that is displayed in an enlarged manner may be shrunk by a touch operation such as pinching with fingers (pinching closed). The display position of each thumbnail image on the preview screen 61 is moved in response to a touch operation such as swiping or flicking. Hereinafter, an example of a screen transition in the display state of the preview display screen 61c illustrated in FIG. 5 in response to various touch operations will be described.

When a part of the preview screen 61 on which the selected thumbnail image is displayed in an enlarged manner, in which objects such as thumbnail images or icons are not displayed (outside of an object region) is touched, the enlarged display (selection state) of the thumbnail image is cancelled. Touch operations that cancel the enlarged display (selection state) of the thumbnail image include, for example, an operation of tapping the outside of the thumbnail image and an operation of swiping or flicking performed outside of the thumbnail image. The tapping is assumed to be an operation of simply touching the display screen without any tracing on the display screen (touch panel). The swiping or flicking is assumed to be an operation that accompanies a tracing (stroking) motion on the display screen (touch panel).

When, for example, the outside of the thumbnail image is tapped, the enlarged display of the thumbnail image is cancelled (selection state thereof is cancelled), and the thumbnail image that is previously displayed in an enlarged manner is displayed in normal size. The thumbnail images t1, t2, ... of each page are displayed in a linear display position in reference to the position of the thumbnail image of which the selection state is cancelled. When, for example, the preview display screen 61c of FIG. 5 is tapped at a location outside of the selected thumbnail image, the enlarged display (selection) of the thumbnail image t6 is cancelled (displayed in normal size), and each of the thumbnail images t1, t2, ... is displayed in a display position in which the thumbnail image t6 is present at the center as illustrated on the preview display screen 61 b in FIG. 4. In this case, the deselected thumbnail image t6 may be displayed with the frame 64 as illustrated on the preview display screen 61 b in FIG. 4.

That is, when a location outside of the object region (thumbnail image) is tapped, the thumbnail image of which the selection state is cancelled (the enlarged display thereof is terminated), and the thumbnail image is displayed in normal size in a position where the thumbnail image was previously displayed in an enlarged manner. When, for example, the object region is tapped on the preview display screen on which a thumbnail image is displayed in an enlarged manner at the center, each thumbnail image is displayed in a display position in which a deselected thumbnail image is present at the center. As a result, the user, immediately after the thumbnail image is deselected (immediately after the enlarged display is terminated), easily recognizes the thumbnail image that was previously selected and can easily select any thumbnail image of a page in the vicinity of the page that was previously selected. In addition, the thumbnail image that was previously selected can be easily recognized by highlighting the deselected thumbnail image with a frame and the like.

Each thumbnail image may be displayed in such a manner that the deselected thumbnail image is present at the center, also in a case where the deselected thumbnail image corresponds to the last page. Each thumbnail image may be displayed in such a manner that the deselected thumbnail image is present at the right end, or other display area limit such as an end of the display axis, in a case where the deselected thumbnail image corresponds to the last page.

The preview display screen 61 c on which a thumbnail image is displayed in an enlarged manner may receive a touch operation that cancels the enlarged display and moves the display position of each thumbnail image. For example, a swiping operation or a flicking operation, when input outside of the object region on the preview display screen 61, may cancel the enlarged display and move the display position of each thumbnail image.

FIG. 6 is an example of the preview display screen 61 d in a case where a leftward swiping operation corresponding to three pages is input in a displayed part other than the thumbnail image t6 illustrated in FIG. 5. That is, when a leftward swiping operation corresponding to three pages is input in a displayed part other than the thumbnail image t6 on the preview display screen 61c illustrated in FIG. 5, the display unit 44 displays the preview display screen 61 d as illustrated in FIG. 6. On the preview display screen 61 d illustrated in FIG. 6, the thumbnail image t6 is deselected, and each of the thumbnail images t1, t2, ... is displayed in a display position that is moved to the left by a distance corresponding to three pages. In this case, the deselected thumbnail image t6 may be displayed with the frame 64.

According to the above example, on the preview display screen 61, the user can specify, with a series of touch operations (swiping or flicking), moving a display position in which a selected thumbnail image remains displayed in an enlarged manner. As a result, an operation for moving the display position of the thumbnail images can be simply and intuitively performed on the preview display screen 61. That is, the user can specify, with a series of touch operations such as swiping or flicking, cancelling the enlarged display (selection state) and moving the display position of each thumbnail image on the preview screen 61.

The preview display screen 61c on which a selected thumbnail image is displayed in an enlarged manner may receive a touch operation that moves the display position of each thumbnail image without cancelling the enlarged display. For example, swiping (or flicking) the display region of the thumbnail that is displayed in an enlarged manner on the preview display screen 61 may move the display position of each thumbnail image without cancelling the enlarged display.

FIG. 7 illustrates a display example of the preview display screen 61e in a case where a leftward swiping (or flicking) operation is input in the part where the thumbnail image t6 is displayed on the preview display screen 61c illustrated in FIG. 5. That is, when a leftward swiping operation is input in the part where the thumbnail image t6 is displayed on the preview display screen 61c illustrated in FIG. 5, the display unit 44 displays the preview display screen 61e as illustrated in FIG. 7. On the preview display screen 61e illustrated in FIG. 7, each of the thumbnail images t1, t2, ... is displayed in a display position that is moved (shifted) to the left and in which the thumbnail image t6 remains displayed in an enlarged manner.

According to the above example, on the preview screen 61, the user can specify, with a series of touch operations (swiping or flicking), moving a display position in which a selected thumbnail image remains displayed in an enlarged manner. As a result, an operation for moving the display position of the thumbnail images can be simply and intuitively performed on the preview display screen 61. That is, on the preview screen 61, the user can specify, with a series of touch operations such as swiping or flicking, moving the display position of each thumbnail image with the enlarged display.

Next, an example sequence of operations for displaying the preview display provided by the MFP 1 according to the embodiment will be described.

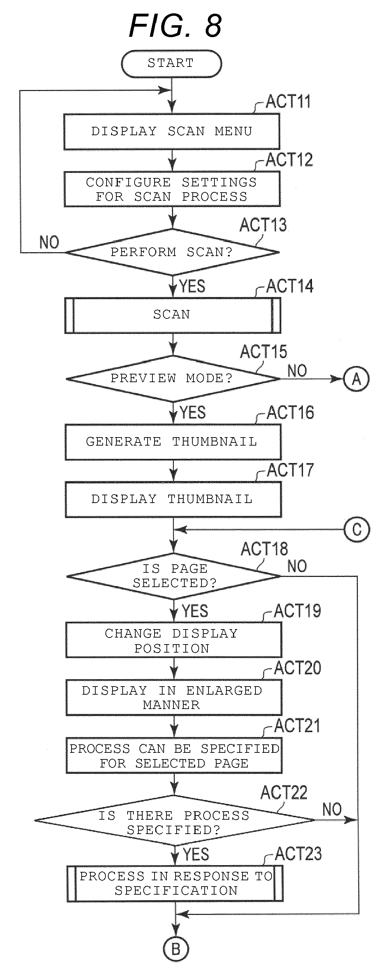

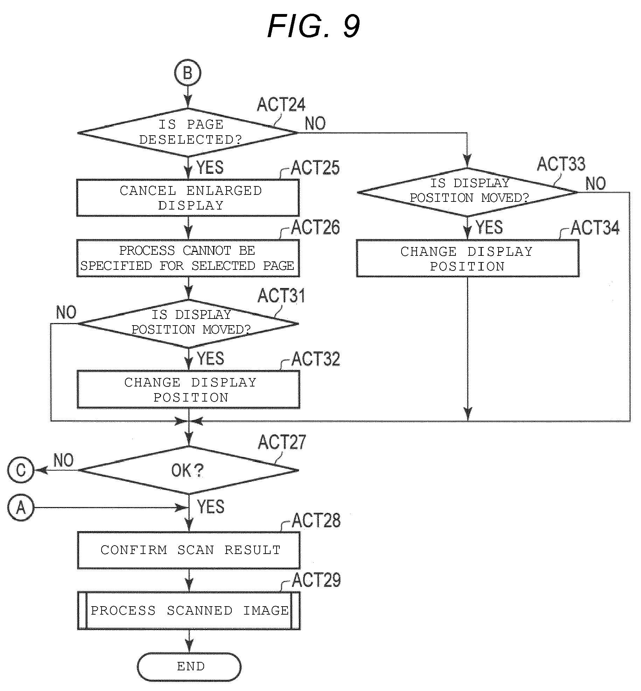

FIG. 8 and FIG. 9 are flowcharts illustrating an example sequence of operations in a case where the MFP 1 according to the embodiment provides the preview display in a scan process.

The processor 31 of the system control unit 13 causes the display unit 44 of the control panel 14 to display a main menu screen in a standby state. The main menu screen is an operating screen that includes an icon (scan button) which specifies performing a scan process. The processor 41 of the control panel 14 detects the user touching the part where the scan button is displayed on the touch panel 45 from the detection signal of the touch panel 45. When the processor 41 detects the user touching the scan button, the processor 41 notifies the processor 31 that the scan button is specified. Accordingly, the processor 31 detects a scan process being specified.

The processor 31 causes the display unit 44 to display the scan menu screen 51 when a scan process is specified (ACT 11). The scan menu screen 51 is an operating screen on which the content of a scan process is set. The processor 31 receives the content of a scan process, scan settings, an instruction to perform the scan, and the like in a state where the scan menu screen 51 is displayed. The processor 31 sets the content of a scan process according to a specified icon (ACT 12) in a case where input is provided on an icon that specifies the content of a scan process. The processor 31 reflects specified scan settings in a case where scan settings are specified.

The processor 31 causes the scanner 11 to perform a scan (ACT 14) in a case where an icon that specifies performing a scan is specified (YES in ACT 13). The processor 31 sends to the scanner 11 an operating instruction to scan each page of the document in accordance with the scan settings that are set. The scanner 11 scans the images of each page of the document in order in response to the operating instruction from the processor 31. For example, the scanner 11 may read documents that are supplied in order by the ADF or may read documents in order that are set in order on the platen glass. The scanner 11 supplies the image data corresponding to each page of the scanned document to the system control unit 13. The system control unit 13 stores the image data corresponding to each page scanned by the scanner 11 in the image memory 35. The scanner 11 is assumed to scan the document having a plurality of pages.

When a scan is initiated, the processor 31 determines whether or not the preview display of the scanned images (scan results) is selected (ACT 15). The processor 31 causes the display unit 44 to display the preview display screen 61 of the images of each page scanned by the scanner 11 in a case where the preview display is selected (YES in ACT 15). The processor 31 generates thumbnail images of each page from the images of each page scanned by the scanner 11 in order to display the preview display screen (ACT 16).

The thumbnail images may be generated by the processor 31, or the image processing unit 36 may generate the thumbnail images. The thumbnail images may be generated by reducing a size of the scanned images. In this case, the thumbnail images can be generated by simple processing. The thumbnail images may be generated in such a manner that the scanned images are reduced by a predetermined conversion process. In this case, the thumbnail images can have a smaller amount of data than the scanned images by a conversion process such as decreasing a resolution, and processing load for the preview display can be reduced.

The processor 31, when thumbnail images of each page are generated, causes the display unit 44 to display the preview display screen 61 on which the generated thumbnail images of each page are linearly arranged (ACT 17). For example, the processor 31 displays the thumbnail images of each page in order of generation in the display region 62a after the preview display screen 61 is displayed. The processor 31 may cause the display unit 44 to display the preview display screen 61 after the thumbnail images of all pages are generated.

The processor 31 receives selection of a thumbnail image (ACT 18) in a state where the preview display screen 61 is displayed. For example, the processor 41 monitors input provided on displayed parts (icons) of the thumbnail images of each page displayed by the display unit 44, using the detection signal of the touch panel 45. The processor 41, in a case where input provided on a displayed part of a thumbnail image is detected, notifies the processor 31 of information that indicates the selected thumbnail image. The processor 31 detects the selected thumbnail image from the notification from the processor 41.

The processor 31, in a case where a thumbnail image is selected (YES in ACT 18), changes (updates) the display position of each thumbnail image in reference to the selected thumbnail image (ACT 19). For example, the processor 31 moves (shifts) the display position of each thumbnail image in such a manner that the selected thumbnail image is present at the center, without changing the display order of each thumbnail image. The processor 31 moves the display position of each thumbnail image in such a manner that at least the thumbnail image of the subsequent page is displayed with the selected thumbnail image. The processor 31 may highlight the selected thumbnail image with the frame 64 and the like.

The processor 31 displays the selected thumbnail image in an enlarged manner (ACT 20) after the display position of each thumbnail image is changed in reference to the selected thumbnail image. The processor 31 displays the selected thumbnail image in an enlarged manner while permitting the preceding and succeeding thumbnail images to be selected. The processor 31 may change the display state of the thumbnail image that is displayed in an enlarged manner, in response to a touch operation of the user.

The processor 31, in a case of displaying a thumbnail image in an enlarged manner, displays an icon that specifies available processes for the page corresponding to the thumbnail image is displayed in an enlarged manner (ACT 21). For example, the processor 31, on the preview display screen 61 c illustrated in FIG. 5, displays one thumbnail image in an enlarged manner and displays a delete icon, a replace icon, and an insert icon in a selectable manner. In this state, the processor 31 performs processes according to a displayed icon specified (ACT 23). For example, the processor 31, in a case where the delete icon is specified, deletes the scanned image of the page corresponding to the selected thumbnail image that is displayed in an enlarged manner.

The processor 31, in a case where a thumbnail image is displayed in an enlarged manner, receives an instruction to cancel the enlarged display of the selected thumbnail image that is displayed in an enlarged manner (ACT 24). For example, the processor 31 receives, as an instruction to cancel the selection of the thumbnail image, a touch operation (tapping, swiping, flicking, and the like) that is provided in a region (outside of the object region) where objects such as thumbnail images and icons are not displayed on the preview display screen 61.

The processor 31 cancels the enlarged display (ACT 25) in a case where the processor 31 detects deselection being specified (YES in ACT 24). The processor 31 may highlight the thumbnail image immediately after the enlarged display thereof is cancelled, by, for example, displaying a frame as illustrated in FIG. 4.

The processor 31 cancels the enlarged display and does not display the icon that specifies possible processes for the page of the selected thumbnail image (ACT 26). For example, the processor 31 displays the insert icon 63d, the replace icon 63e, and the delete icon 63f in a non-selectable manner as illustrated in FIG. 4.

The processor 31, in a case of cancelling the enlarged display, determines whether or not to move the display position of each thumbnail image (ACT 31). For example, the processor 31 determines the display position of each thumbnail image not to be changed when the touch operation provided outside of the object region is an operation (tapping) that does not include a moving instruction. The processor 31 determines the display position of each thumbnail image to be changed when the touch operation provided outside of the object region is swiping or flicking.

The processor 31, in a case where the display position of the thumbnail images is determined not to be changed (NO in ACT 31), does not change the display position that is previously moved in response to the selection of the thumbnail image. That is, the processor 31 does not change the display position of the thumbnail images and changes the enlarged display of the thumbnail to normal display thereof in a case where a place outside of the object region is tapped. For example, the processor 31 transitions the preview display screen 61 displayed in the display unit 44 from the preview display screen 61 c illustrated in FIG. 5 to the preview display screen 61 b displayed in FIG. 4.

The processor 31, in a case where the display position of the thumbnail images is determined to be changed (YES in ACT 31), changes the display position of each thumbnail image including the thumbnail image of which the enlarged display is changed to the normal display (ACT 32). That is, the processor 31 changes the enlarged display to the normal display and moves the display position of each thumbnail image in a case where a place outside of the object region is swiped or flicked. For example, the processor 31 transitions the preview display screen 61 displayed in the display unit 44 from the preview display screen 61c illustrated in FIG. 5 to the preview display screen 61d illustrated in FIG. 6.

The processor 31, in a case where the processor 31 does not detect deselection being specified (NO in ACT 24), determines whether or not moving the display position of the thumbnail images with the enlarged display (without deselection) is specified (ACT 33). The processor 31 determines the display position of each thumbnail image to be moved with the enlarged display in a case where, for example, swiping input or flicking input provided on the displayed part of the thumbnail image that is displayed in an enlarged manner is detected.

The processor 31 proceeds to ACT 27 without moving the display position of the thumbnail images in a case where the display position of the thumbnail images is determined not to be changed (NO in ACT 33).

The processor 31, in a case where the display position of the thumbnail images is determined to be moved (YES in ACT 33), changes the display position of each thumbnail image including the selected thumbnail image that is displayed in an enlarged manner (ACT 34). That is, the processor 31, in a case where swiping input or flicking input is provided in the display region of the thumbnail image that is displayed in an enlarged manner, shifts the display position of each thumbnail image while maintaining the enlarged display. For example, the processor 31 transitions the preview display screen 61 displayed in the display unit 44 from the preview display screen 61 c illustrated in FIG. 5 to the preview display screen 61 e illustrated in FIG. 7.

The processes of ACT 18 to ACT 26 and ACT 31 to ACT 34 are repeated until input provided on the OK icon 63a is detected (NO in ACT 27) or until input provided on the cancel icon 63b is detected. The processes of ACT 17 to ACT 27 may be performed by the processor 41 that receives an instruction from the processor 31.

The processor 31 causes the scan result of the preview display to be confirmed (ACT 28) in a case where input provided on the OK icon 63a is detected (YES in ACT 27). When the scan result is confirmed, the processor 31 performs processes specified for the confirmed scan result (scanned images of each page) (ACT 29). For example, the processor 31 transmits the scanned images of each page to a specified e-mail address in a case where, for example, scan to e-mail is specified. The processor 31 retains the scanned images of each page in a specified file location (folder) in a case where scan to file is specified.

The processor 31 discards the scan result in a case where input provided on the cancel icon 63b is detected. The processor 31 configures scan settings in a case where input provided on the scan setting icon 63c is detected. These scan settings are applied to a scan process that is additionally performed. The processes of ACT 18 to ACT 27 may be performed by the processor 41.

According to the embodiment described heretofore, a digital multi-functional peripheral as an image processing apparatus displays a preview display screen on which the scanned images of each page of a document are displayed in a list of thumbnails. The image processing apparatus, in a case where one thumbnail image is selected, moves the display position of each thumbnail image in reference to the selected thumbnail image. The image processing apparatus displays the image of the page of the selected thumbnail image in an enlarged manner after the display position is moved. Accordingly, the image of a selected page is easily recognized and processes for the images of the pages preceding and succeeding the selected page are easily specified.

The image processing apparatus according to the embodiment can provide a preview display screen on which the display position of each thumbnail image is moved in reference to the selected thumbnail image. For example, the image processing apparatus according to the embodiment can provide a preview display screen on which the display position of each thumbnail image is moved in such a manner that the selected thumbnail image is present at the center. When the thumbnail images of each page are displayed in such a manner that the selected thumbnail image is present at the center, the selected page is easily recognized, and the images of the pages preceding and succeeding the selected page are easily identified and selected. As a result, the image processing apparatus according to the embodiment can provide preview display of the images of each scanned page in which the page selected by a user is easily recognized and subsequent operations are easily performed. The image processing apparatus according to the embodiment can provide preview display in which the selected image (page) is easily recognized in a case where the enlarged display of the selected image is cancelled (enlarged screen is closed).

A program that is executed by the control unit of the image processing apparatus according to the embodiment is provided by being recorded in a computer-readable storage medium such as a CD-ROM, a flexible disk, a CD-R, or a digital versatile disk (DVD) as a file in an installable format or an executable format. The program executed by the control unit of the image processing apparatus according to the embodiment may be provided or distributed via a network such as the Internet.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. An image processing apparatus comprising:
an acquiring unit configured to acquire a document comprising a plurality of images each corresponding to one of a plurality of pages;
a display unit configured to display a screen including at least two of a plurality of thumbnail images arranged linearly and in a sequence corresponding to a sequence of the plurality of pages, each of the thumbnail images being generated from a corresponding one of the plurality of images acquired by the acquiring unit;
an input unit configured to receive:
a selection input selecting one of a plurality of thumbnail images displayed on the screen, and
a process input selecting an operation to change the sequence of the thumbnail images with respect to the selected thumbnail image; and
a control unit configured to:
in response to the selection input, control the display unit to update the screen so that a display position of thumbnail images displayed in the screen is moved to a predetermined display position in which the selected thumbnail image and a thumbnail image of a subsequent page are displayed and a displayed size of the selected thumbnail image is larger than a displayed size of the thumbnail image of the subsequent page,
in response to the process input, update an order of the plurality of images and control the display unit to update the screen, in accordance with the changed sequence of the thumbnail images indicated by the process input, and
provide the document with the plurality of images in the changed order to a selected destination.

2. The apparatus according to claim 1, wherein the predetermined display position is a position where the selected thumbnail image and thumbnail images of preceding and succeeding pages are displayed.

3. The apparatus according to claim 1, wherein the predetermined display position is a position where the selected thumbnail image is at a center of the linearly arranged thumbnail images.

4. The apparatus according to claim 1, wherein:
the input unit is further configured to receive a cancellation input different from the selection input, and
the control unit controls the display unit to update the screen based on the deselection input so that the displayed size of a previously selected thumbnail image is the same as the displayed size of the thumbnail image of the subsequent page.

5. The apparatus according to claim 1, wherein the input unit is a touch panel on the display unit.

6. The apparatus according to claim 1, wherein the acquisition unit is a scanner that acquires the plurality of images by scanning the plurality of pages.

7. The apparatus according to claim 1, wherein the selected destination is one of an email address, a memory location corresponding to a storage device of the apparatus, and a memory location corresponding to an external storage device.

8. The apparatus according to claim 1, wherein the operation to change the sequence of the thumbnail images is one of: a delete operation in which the selected thumbnail image is deleted from the sequence, an insert operation in which another thumbnail image is inserted in the sequence preceding the selected thumbnail image, and a replace operation in which the selected thumbnail image is replaced with a different thumbnail image.

9. An image processing method comprising the steps of:
acquiring a document comprising a plurality of images each corresponding to one of a plurality of pages;
generating a plurality of thumbnail images from the plurality of acquired images;
displaying on a screen at least two of the plurality of thumbnail images arranged linearly and in a sequence corresponding to a sequence of the plurality of pages;
receiving a selection input selecting one of a plurality of thumbnail images displayed on the screen;
updating the screen based on the received selection input so that a display position of thumbnail images displayed in the screen is moved to a predetermined display position in which the selected thumbnail image and a thumbnail image of a subsequent page are displayed and a displayed size of the selected thumbnail image is larger than a displayed size of the thumbnail image of the subsequent page;
receiving a process input selecting an operation to change the sequence of the thumbnail images with respect to the selected thumbnail image;
in response to the process input, updating an order of the plurality of images and controlling the display unit to update the screen, in accordance with the changed sequence of the thumbnail images indicated by the process input; and
providing the document with plurality of images in the changed order to a selected destination.

10. The method according to claim 9, wherein the predetermined display position is a position where the selected thumbnail image and thumbnail images of preceding and succeeding pages are displayed.

11. The method according to claim 9, wherein the predetermined display position is a position where the selected thumbnail image is at a center of the linearly arranged thumbnail images.

12. The method according to claim 9, further comprising the steps of:
receiving a cancellation input different from the selection input; and
updating the screen based on the deselection input so that the displayed size of a previously selected thumbnail image is the same as the displayed size of the thumbnail image of the subsequent page.

13. The method according to claim 9, wherein acquiring the plurality of images comprises scanning the plurality of pages to generate the plurality of images.

14. The method according to claim 9, wherein the selected destination is one of an email address, a memory location corresponding to a storage device of the apparatus, and a memory address corresponding to an external storage device.

15. A non-transitory computer readable medium containing instructions causing an image processing apparatus to perform the steps of:
acquiring a document comprising a plurality of images each corresponding to one of a plurality of pages;
generating a plurality of thumbnail images from the plurality of acquired images;
displaying on a screen at least two of the plurality of thumbnail images arranged linearly and in a sequence corresponding to a sequence of the plurality of pages;
receiving a selection input selecting one of a plurality of thumbnail images displayed on the screen;
updating the screen based on the received selection input so that a display position of thumbnail images displayed in the screen is moved to a predetermined display position in which the selected thumbnail image and a thumbnail image of a subsequent page are displayed and a displayed size of the selected thumbnail image is larger than a displayed size of the thumbnail image of the subsequent page;
receiving a process input selecting an operation to change the sequence of the thumbnail images with respect to the selected thumbnail image;
in response to the process input, updating an order of the plurality of images and controlling the display unit to update the screen, in accordance with the changed sequence of the thumbnail images indicated by the process input; and
providing the document with plurality of images in the changed order to a selected destination.
